# EUROPEAN PATENT APPLICATION

(11) **EP 1 782 997 A1**
(43) Date of publication of application: **09.05.2007**
(21) Application number: 05755864.5
(22) Date of filing: 01.07.2005
(51) Int. Cl.: B60N 3/08, A24F 19/00, A24F 19/10, B60N 3/10

(54) **CONTAINER AND CONTAINER HOLDING STRUCTURE**

(30) Priority: 02.07.2004 JP 2004196176; 03.09.2004 JP 2004256436
(71) Applicant: Calsonic Kansei Corporation, Tokyo 164-8602 (JP)
(72) Inventor: ABE, Tadanobu, CALSONIC KANSEI CORPORATION, Tokyo 1648602 (JP)
(74) Representative: Grünecker, Kinkeldey, Stockmair & Schwanhäusser Anwaltssozietät
(86) International application number: PCT/JP2005/012188
(87) International publication number: WO 2006/004032

(57) **Abstract**

A container retaining structure includes a container capable of retaining in a beverage container retaining portion of a cup holder, and the container is disposed in a finisher portion provided in an end plane of the beverage container retaining portion.

## Description

### Technical Filed

The present invention relates to a container and a retaining structure thereof.

### Background Art

There has been disposed a cup holder device in an interior of a vehicle such as an automobile. At the same time, an ashtray for a vehicle interior is being switched from a fixed ashtray to a portable ashtray which can be moved in the vehicle interior. This portable ashtray can be retained in a beverage container retaining portion of the cup holder device (for example, reference to Patent Document 1).
Patent Document: Published Utility Model Application H06-75877

### Disclosure of Invention

### Problem to be Solved by the Invention

However, there was a problem that the portable ashtray could not be retained in the beverage container retaining portion of cup holder device, when a beverage container was retained in the cup holder device.

It is, therefore, there is a need for a container retaining structure which can retain a beverage container and a container at the same time.

### Means for Solving Problems

In order to solve the above problem, the present invention is directed to a container retaining structure, wherein a container capable of retaining in a beverage container retaining portion of a cup holder is disposed in a finisher portion provided in an end plane of the beverage container retaining portion.

### Effects of the Invention

According to the present invention, the container is housed in the cup holder device in a state that the container is retained in the beverage container retaining portion. When a beverage container is not retained in the beverage container retaining portion, the container can be used in this state. When the beverage container is retained in the beverage container retaining portion, the container is removed from the beverage container retaining portion, so as to attach the container to the finisher portion provided in the end plane of the beverage container retaining portion. The beverage container and the container are accordingly retained at the same time; thus, the beverage container and the container can be used at the same time.

The present application is based on and claims priorities from Japanese application No.2004-196176, filed on July 2, 2004 and Japanese application No. 2004-256436, filed on September 3, 2004, and the disclosures of which are hereby incorporated by reference herein in their entirety.

### Brief Description of Drawings

[FIG.1] An entire perspective view of an embodiment according to the present invention.
[FIG.2] A lateral cross-section view of FIG. 1.
[FIG.3] An exploded perspective view illustrating a locking mechanism shown in FIG. 2.
[FIG.4] A perspective view illustrating a portable ashtray viewed from a back plane side in the embodiment according to the present invention.
[FIG. 5] An exploded perspective view illustrating the portable ashtray shown in FIG. 4, which is viewed from the front plane side

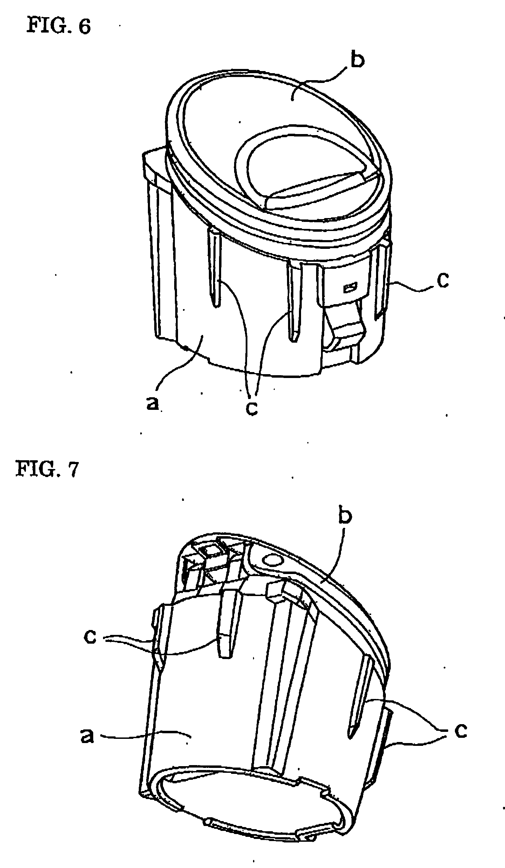

[FIG.6] A perspective view showing a conventional example.
[FIG.7] A perspective view as viewed FIG. 6 from the lower side.

### Description of Reference Numerals

1 cup holder
2 housing body
3 cup holder drawer
5 beverage container retaining portion
11 flange portion
12 finisher portion
15 portable ashtray
16 portable ashtray body
17 lid portion
24 engaging part
25 locking mechanism
50 ring member

### Best Mode for Carrying Out the Invention

Hereinafter, an embodiment of the present invention will be described in details with reference to the accompanying drawings. In the present embodiment, an example that a container according to the present invention is used for an ashtray to be disposed in a vehicle will be explained. Embodiment

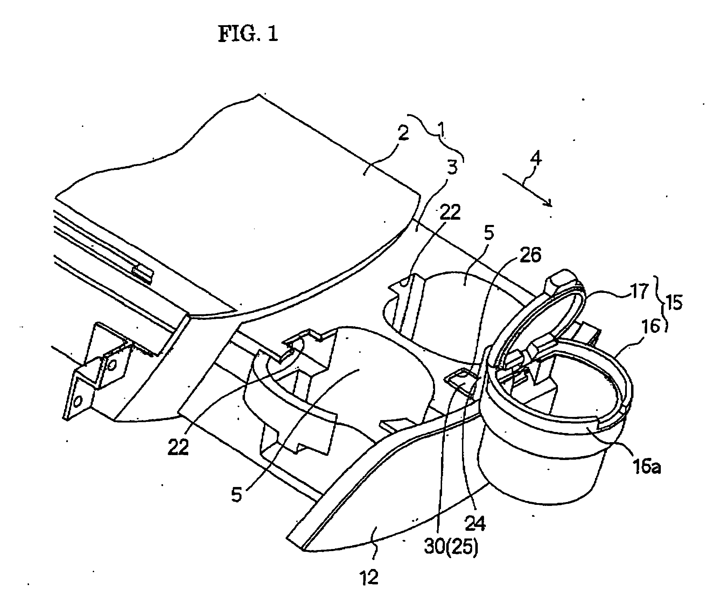

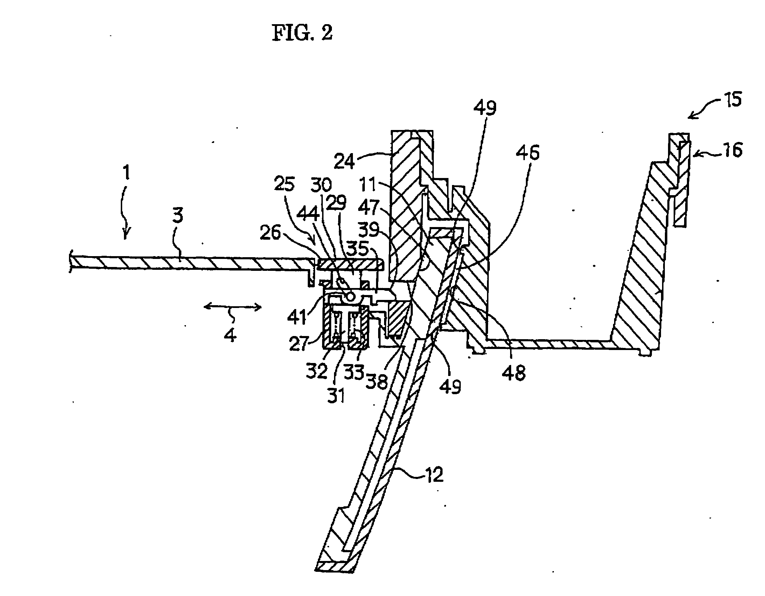

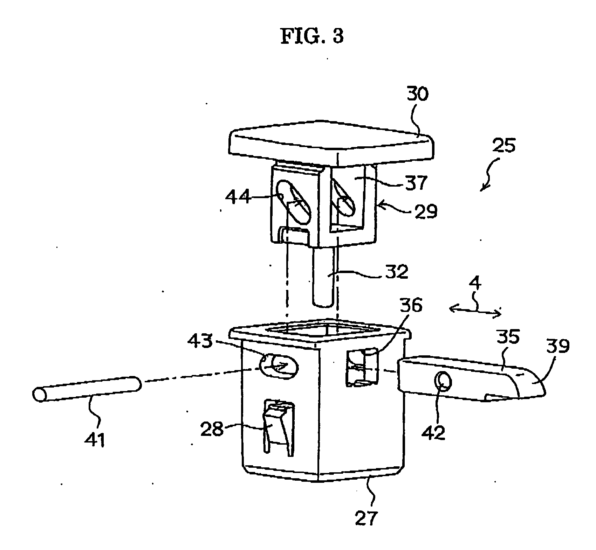

FIGs. 1-5 illustrate the embodiment of the present invention.

At first, referring to a structure, a cup holder 1 capable of holding a beverage container is disposed in an interior of a vehicle such as an automobile. This pullout cup holder 1 comprises a housing body 2 having a box frame shape and a cup holder drawer 3 which is drawable and housable to the housing body 2, for example. The housing body 2 is fastened to a back side of an opening portion formed in an interior panel such as an instrument panel. The cup holder drawer 3 is arranged to be taken in and out from the opening portion of the instrument panel. The cup holder drawer 3 has a front side portion in a pullout direction 4 provided with beverage container retaining portions 5. Each of the beverage container retaining portions 5 comprises a concave shape, for example. In this embodiment, the two beverage container holding portions 5 are disposed in parallel on the left and right (in the direction orthogonal to the pullout direction 4). One of the beverage container retaining portions 5 has a movable side plane. The cup holder drawer 3 has the front side portion in the pullout direction 4 formed with a flange portion 11 which has a surface provided with a finisher portion 12 for covering the opening portion. The finisher portion 12 is attached to be the same level with the interior panel such as an instrument panel. The finisher portion 12 and the flange portion 11 have an inclined plane similar to that of the interior panel such as an instrument panel. In this embodiment, the inclined plane inclines on the down grade toward the back side.

The beverage container retaining portion 5 of the cup holder drawer 3 is provided with a portable ashtray 15 capable of retaining in the beverage container retaining portion 5. The portable ashtray 15 has a size that the cup holder drawer 3 can be housed in the housing body 2 while retaining the portable ashtray 15 in the beverage container retaining portion 5. The portable ashtray 15 comprises an ashtray body 16 and a lid portion 17 capable of opening and closing an opening portion in the upper end of the ashtray body 16. The ashtray body 16 has a short cylindrical shape having a bottom portion. The lid portion 17 is supported in the upper end of the ashtray body 16 via a hinge in an openable and closable manner.

In this embodiment, the portable ashtray 15 is provided with an engaging portion 24 capable of engaging with the upper edge portion of the finisher portion 12 of the surface of cup holder 1 in a hooked state. The engaging portion 24 comprises a hook shape, for example. The engaging portion 24 is provided in the hinge side of the lid portion 17. Each of the beverage container retaining portions 5 is provided with a counter boring portion 22 capable of preventing the interference with the engaging portion 24.

In addition, the cup holder 1 is provided with a locking mechanism 25 capable of fastening and releasing the engaging portion 24 of the portable ashtray 15 while being engaged. The locking mechanism 25 comprises a casing 27 capable of inserting into an attachment hole 26 provided in the middle of the right and left beverage container retaining portions 5 of the cup holder drawer 3 and in the vicinity of the finisher portion 12 from above. The casing 27 can be attached to the attachment hole 26 through one-touch operation by means of locking claws 28 provided in the both side planes of the casing 27. A sliding body 29 is fitted into the casing 27 in a slidable manner in the up and down direction. A part of the sliding body 29 projects upward from the casing 27. The sliding body has a peak portion formed with a flange-shaped releasing button 30 which becomes the substantially same level with the upper plane of cup holder drawer 3. The casing 27 has the bottom portion provided with a guide hole 31. The sliding body 29 is provided with a guide bar 32 which projects downward to be guided to the guide hole 31. An elastic body 33 such as a spring which biases the sliding body 29 upward is disposed in the outer circumference of the guide bar 32 between the bottom portion of the casing 27 and the bottom portion of the sliding body 29.

Moreover, a locking claw portion 35 is disposed between the casing 27 and the sliding body 29, so as to penetrate therebetween in the pullout direction 4. In this case, through holes 36 having the almost same shape with the cross section of the locking claw portion 35 are formed in the both planes of the casing 27 in the pullout direction 4. A slide hole 37 which guides the locking claw portion 35 upward and downward is formed in the both planes of the sliding body 29 in the pullout direction 4. This locking claw portion 35 is configured such that its leading end projects to the front side of the pullout direction 4 and is inserted into a locking hole portion 38 formed in the engaging portion 24. Furthermore, the locking claw portion 35 has the upper portion of the leading end provided with a pushing guide plane 39 having an inclined shape, which is pushed to the casing 27 side by pushing the lower end of the engaging portion 24 from above.

A guide shaft 41 is disposed among the casing 27, the sliding body 29 and the locking claw portion 35 so as to penetrate thereamong in the right and left direction. In this case, a penetration hole 42 having the almost same shape with the guide shaft 41 is formed in the planes of the right and left direction of the locking claw portion 35, sliding holes 43 which guide the guide shaft 41 in the pullout direction 4 are formed in the planes of the right and left direction of the sliding body 29, and sliding holes 44 which guide the guide shaft 41 at an angle are formed in the planes of the right and left direction of the sliding body 29. The inclined sliding holes 44 are formed on the down grade toward the front side of the pullout direction 4. Thereby, the leading end of the locking claw portion 35 is drawn into the casing 27 side against the biasing force of the elastic body 33 such as a spring, when pressing the releasing button 30, and the leading end of locking claw portion 35 projects to the front side of the pullout direction 4 by the biasing force of the elastic body 33 such as a spring, when releasing the releasing button 30.

Furthermore, the engaging portion 24 of portable ashtray 15 is provided with a supporting plane 47 which is supported to the back plane side of the flange portion 11 (finisher portion 12) in a state that a required spacing 46 is maintained between the cup holder 1 and the surface of finisher portion 12. This supporting plane 47 comprises an inclined plane corresponding to the inclination of the back plane side of the finisher portion 12. In addition, a counter boring portion 48 which becomes substantially parallel to the surface of finisher portion 12 may be provided in a part facing the surface of finisher portion 12.

The spacing portion (counter boring portion 48) is provided with projections 49 which can prevent the contact between the back plane of the portable ashtray and the surface of finisher portion 1.2. It is preferable for the projections 49 to be disposed in the upper portion and lower portion of the spacing 46. The projections 49 do not generally have contact with the surface of finisher portion 12.

Next, an operation of this embodiment will be described.

The portable ashtray 15 is housed in the cup holder 1 in a state that the portable ashtray is retained in the beverage container retaining portion 5.

When a beverage container is not retained in the beverage container retaining portion 5, the portable ashtray 15 can be used by opening the lid portion 17 in a state that the portable ashtray is retained in the beverage container retaining portion 5.

When the beverage container is retained in the beverage container retaining portion 5, the portable ashtray 15 is removed from the beverage container retaining portion 5, so as to retain the portable ashtray 15 by hooking the engaging portion 24 to the upper edge portion of the finisher portion 12 of the surface of cup holder 1. Accordingly, the beverage container and the portable ashtray 15 can be used at the same time by retaining the beverage container and the portable ashtray 15 at the same time.

In this case, the engaging portion 24 of the portable ashtray 15 while being engaged is fastened by using the locking mechanism 25 provided in the cup holder, such that the portable ashtray can be stably retained. On the contrary, the portable ashtray 15 can be removed by releasing the retaining of the portable ashtray 15 by means of the operation of the locking mechanism 25.

Moreover, in the locking mechanism 25, if the releasing button 30 is pressed against the biasing force of the elastic body 33 such as a spring, the sliding body 29 moves downward. At this time, the guide shaft 41 moves to the back side of the pullout direction 4 along the sliding holes 43, 44; thereby, the leading end of the locking claw portion 35 integrated with the guide shaft 41 is drawn into the casing 27 side. Thus, the locking claw portion 35 is removed from the locking hole portion 38 of the engaging portion 24, so as to release the locking of the engaging portion.

On the contrary, if the releasing button 30 is released against the biasing force of the elastic body 33 such as a spring, the sliding body 29 moves upward. At this time, the guide shaft 41 moves to the front side of the pullout direction 4 along the sliding holes 43, 44; thereby, the leading end of the locking claw portion 35 integrated with the guide shaft 41 projects to the front side of the pullout direction 4. Thus, the locking mechanism becomes a lockable state.

With this lockable state, if the engaging portion 24 of the portable ashtray 15 is hooked to the upper edge portion of the finisher portion 12 of the surface of cup holder 1, the lower end of engaging portion 24 is pressed by the pushing guide plane 39 having an inclined shape of the leading end of the locking claw portion 35 from above; thereby, the leading end of the locking claw portion 35 is once pushed to the casing 27 side. Therefore, the pressing force is released by the locking hole portion 38, and the locking claw portion 35 is inserted into the locking hole portion 38 of the engaging portion 24; thus, the engaging portion is automatically locked.

When the portable ashtray 15 is retained in the upper edge portion of finisher portion 12, since the supporting plane 47 provided in the engaging portion 24 of the portable ashtray 15 is supported by the back plane side of the finisher portion 12 (flange portion 11) of the cup holder 1, the required spacing 46 is formed between the surface side of the finisher portion 12 and the engaging portion 24. Therefore, the surface side of the finisher portion 12 of cup holder 1 is prevented from being scratched when the portable ashtray 15 is retained.

In addition, since the projections 49 provided in the spacing portion (counter boring portion 48) prevents the contact between the surface of engaging portion 24 and the surface of the finisher portion 12, the generation of scratch can be effectively prevented.

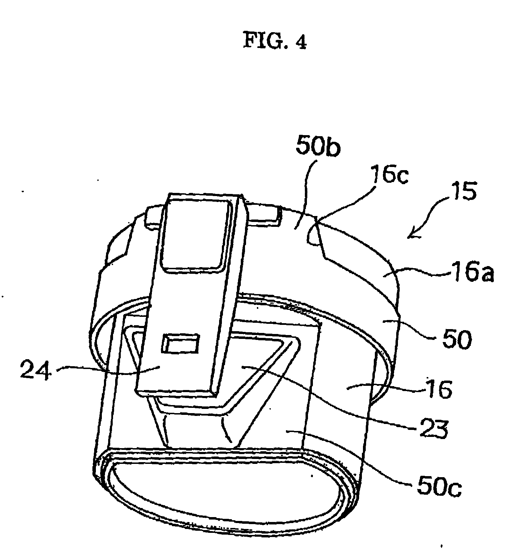

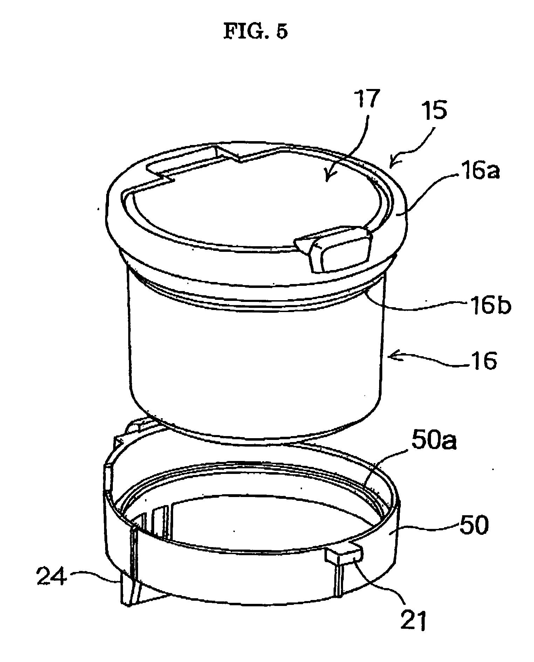

In this embodiment, the example of portable ashtray having the lid and the ashtray body is shown. However, as shown in FIGs. 4, 5, a portable ashtray comprising an attachment member which is detachably attached to the ashtray body 16 in addition to the lid 17 and the ashtray body 16 can be applied to the present invention.

The attachment member according to the present invention comprises a ring member in the example shown in the figures.

In this case, the portable ashtray 15 has an opening and closing direction of the lid portion 17. More particularly, when opening the lid portion 17, the portable ashtray 15 can not be used if the opening portion is not positioned in the front side. Therefore, the portable ashtray body 16 is required to be aligned with respect to the beverage container retaining portion 5 of the cup holder 1, so as to be retained without rotating. For this alignment and stop of the rotation, a rotation stop receiving portion is formed in the beverage container retaining portion 5, and a rotation stop portion 21 is formed in the portable ashtray, so as to engage the rotation stop portion 21 with the rotation stop receiving portion.

As shown in FIGs. 4, 5, the rotation stop portion 21 is formed in the ring member 50 detachably attached to the portable ashtray body 16. In this case, the portable ashtray body 16 has a flange 16a for disposing the lid portion 17 to the upper end, and has a circumference groove 16b formed in a position lower than that of the flange 16a. The ring member 60 has a size capable of fitting to the portable ashtray body 16 from the lower side thereof. The ring member 50 has an outer diameter substantially equal to an outer diameter of the flange 16a. The fitted ring member 50 is configured to continue to the flange 16a with the almost same plane. The ring member 50 has an inner circumference provided with a projection 50a which is formed in the circumference direction and corresponds to the circumference groove 16b. The ring member 50 is retained in the portable ashtray body by the fitting between the circumference groove 16a and the projection 50a. In addition, a notch 16c is formed in a part of the flange 16a of the portable ashtray body 16, and a convex portion 50b is formed in the ring member 50. The rotation of the portable ashtray body is stopped by fitting the convex portion 50b to the notch 16c. The notch 16c and the convex portion 50b are provided in the hinge side of the lid portion 17.

In addition, the portable ashtray body 16 is provided with a receiving plane 23 facing a design plane (finisher portion 12) of the front side of the cup holder 1. This receiving plane 23 formed in a flat plane 50c formed by cutting a part of the portable ashtray body 16 having a short cylindrical shape. On the contrary, the ring member 50 is provided with the engaging portion 24 capable of engaging with the edge portion of design plane. The portable ashtray can be attached to the edge portion of the design plane by the receiving plane 23 and the engaging portion. The receiving plane 23 and the engaging portion 24 are disposed in the hinge side of lid body 17. The beverage container retaining portion 5 is provided with the counter boring portion 22 capable of preventing the interference with the engaging portion 24 (reference to FIG. 1).

The cup holder 1 is provided with the locking mechanism 25 capable of fastening and releasing the engaging portion 24 of the portable ashtray 15 while being engaged and retained.

Next, an operation of the example shown in FIGs. 4, 5 will be explained.

The portable ashtray 15 is housed in the cup holder 1 in a state that the portable ashtray 1.5 is retained in the beverage container retaining portion 5 of the cup holder drawer 3. The cup holder drawer 3 can be drawn and housed in a state that the portable ashtray 15 is housed.

When a beverage container is not retained in the beverage container retaining portion 5, the portable ashtray 15 can be used by opening the lid portion 17 in a state that the portable ashtray is retained in the beverage container retaining portion 5.

In this case, if the rotation stop 21 formed in the portable ashtray is engaged with the rotation stop receiving portion formed in the beverage container retaining portion 5, the alignment and stop of the rotation are performed. Thereby, the opening portion of portable ashtray body 16 is constantly maintained in the front side when opening the lid portion 17. In addition, the alignment and stop of rotation can be performed by the engaging portion 24 of the portable ashtray body 16 and the counter boring portion 22 of the beverage container retaining portion 5.

Moreover, when retaining a beverage container in the beverage container retaining portion 5, the portable ashtray 15 is removed from the beverage container retaining portion 5, and the portable ashtray 15 is engaged by hooking the engaging portion 24 with the upper edge portion of finisher portion 12 of the surface of cup holder 1. Thereby, the beverage container and the portable ashtray 15 can be retained at the same time, and the beverage container and the portable ashtray 15 can be used at the same time.

In this case, the portable ashtray 15 can be stably retained by fastening the engaging member 24 of the portable ashtray 15 while being engaged by means of the locking mechanism 25 provided in the cup holder 1. On the contrary, the portable ashtray 15 can be removed by releasing the retaining of the portable ashtray 15 by means of the operation of locking mechanism 25.

According to the example illustrated in FIGs. 4, 5, the rotation stop portion 21 is formed in the ring member 50 detachably disposed with respect to the portable ashtray body 16. As shown in FIGs, 6, 7, a rotation stop portion c has been formed in a portable ashtray body a, so as to engage the rotation stop portion c with a rotation stop receiving portion; however, a position capable of forming the rotation stop receiving portion and a shape of the rotation stop receiving portion are different according to a shape and specification of the cup holder device, which requires an exclusive design of the rotation stop portion c, so the portable ashtray body a has not been shared. On the contrary, according to the example shown in FIGs. 4, 5, since the rotation stop portion 21 as described above is formed in the ring member 50, the portable ashtray body can be applied to various types of cup holder 1 by changing the ring member 50 having the rotation stop portion 21 corresponding to the rotation stop receiving portion of the cup holder 1. Therefore, the portable ashtray body 16 can be shared.

In addition, if the portable ashtray is engaged with the edge portion of design plane (finisher portion 12) of the front side of cup holder 1 to be retained by using the receiving plane 23 provided in the portable ashtray body 16 and the engaging member 24 provided in the ring member 50, the ashtray can be used even though the beverage container is retained in the cup holder 1. Furthermore, the portable ashtray body can be applied to various types of cup holder 1 by changing the ring member 60 having the engaging portion 24 corresponding to the edge portion of design plane of the front side of the cup holder 1. Therefore, the portable ashtray body 16 can be shared.

Although the present invention has been described in terms of exemplary embodiment, it is not limited thereto. It should be appreciated that variations may be made in the embodiment without departing from the scope of the present invention.

## Claims

1. A container retaining structure, wherein a container capable of retaining in a beverage container retaining portion of a cup holder is disposed in a finisher portion provided in an end plane of the beverage container retaining portion.

2. The container retaining structure according to claim 1, comprising an engaging member which is provided in the container and is engaged with the finisher portion.

3. The container retaining structure according to claim 1, comprising:
an attachment member which is detachably attached to the container; and
an engaging member which is provided in the attachment member and is engaged with the finisher portion.

4. The container retaining structure according to claim 3, wherein the attachment member comprises a ring member which surrounds the container and is attached to the container.

5. The container retaining structure according to claim 2, wherein the cup holder is provided with a locking mechanism which fastens the engaging member in a releasable manner.

6. The container retaining structure according to claim 3, wherein the cup holder is provided with a locking mechanism, which fastens the engaging member in a releasable manner.

7. The container retaining structure according to claim 5, wherein a locking hole portion is formed in the engaging member, the locking mechanism includes a locking claw portion to be locked to the locking hole portion in a releasable manner, and the container is detachably attached to the finisher portion by locking the locking claw portion to the locking hole portion.

8. The container retaining structure according to claim 6, wherein a locking hole portion is formed in the engaging member, the locking mechanism includes a locking claw portion to be locked to the locking hole portion in a releasable manner, and the container is detachably attached to the finisher portion by locking the locking claw portion to the locking hole portion.

9. The container retaining structure according to claim 2, wherein the engaging member is provided with a supporting plane for supporting a back plane side of the finisher portion in a state that a predetermined apace is maintained between the container and the finisher portion.

10. The container retaining structure according to claim 2, wherein the container is provided with a projection for preventing a contact to a surface of the finisher portion, so as not to obstruct attachment of the container when attaching the container to the beverage container retaining portion.

11. The container retaining structure according to claim 1, wherein the container comprises an ashtray.

12. The container retaining structure according to claim 3, wherein the attachment member is provided with a rotation stop portion capable of engaging with a rotation stop receiving portion formed in the beverage container retaining portion.

13. A container, comprising:
a container body capable of retaining in a beverage container retaining portion of a cup holder; and
an attachment member which is detachably attached to the container body, wherein
the attachment member is provided with a rotation stop portion capable of engaging with a rotation stop receiving portion formed in the cup holder.

14. The container according to claim 13, wherein the attachment member is provided with an engaging member which is engaged with a finisher portion provided in an end plane of the container retaining portion.

15. The container according to claim 14, wherein the container body comprises a receiving plane facing the finisher portion, and the container body is locked to the finisher portion by the receiving plane and the engaging member.

16. The container according to claim 13, wherein the attachment member comprises a ring member which surrounds the container body and is attached to the container body.
